# EUROPÄISCHE PATENTSCHRIFT

(11) **EP 3 851 645 B1**
(45) Veröffentlichungstag und Bekanntmachung des Hinweises auf die Patenterteilung: **23.11.2022**
(21) Anmeldenummer: 20152432.9
(22) Anmeldetag: 17.01.2020
(51) Int. Cl.: F01N 1/00, F01N 13/00, A01D 34/82

(54) **AUFSITZRASENMÄHER**
RIDE-ON LAWNMOWER
TONDEUSE À GAZON AUTOPORTÉE

(43) Veröffentlichungstag der Anmeldung: 21.07.2021
(73) Patentinhaber: Andreas Stihl AG & Co. KG, 71336 Waiblingen (DE)
(72) Erfinder: LUDWIG, Werner, 83098 Brannenburg (DE); ROHRMOSER, Christian, 6320 Angerberg (AT)
(74) Vertreter: Karzel, Philipp

(56) Entgegenhaltungen:
- EP-A2- 1 099 830
- EP-B1- 1 099 830
- DE-U1- 8 807 068
- FR-A1- 2 275 136
- FR-A1- 2 858 356
- GB-A- 2 470 390
- US-A1- 2013 263 582

## Beschreibung

Die Erfindung betrifft einen Aufsitzrasenmäher nach dem Oberbegriff des Anspruchs 1. Aufgrund der in den Schalldämpfer eingeleiteten Abgase wird das Gehäuse eines Schalldämpfers im Betrieb sehr heiß. Bei Aufsitzrasenmähem wie z.B. aus dem Dokument US2013263582 bekannt, ist der Schalldämpfer in der Regel vor der Achse der vorderen Räder auf Höhe der Achse angeordnet. Bei Kontakt des heißen Schalldämpfergehäuses mit beispielsweise trockenem Schnittgut besteht die Gefahr einer Entzündung des trockenen Schnittguts aufgrund der großen Hitze des Schalldämpfergehäuses.

Der Erfindung liegt die Aufgabe zugrunde, einen gattungsgemäßen Aufsitzrasenmäher derart weiterzubilden, dass die vom Aufsitzrasenmäher ausgehende Entzündungsgefahr minimiert ist.

Diese Aufgabe wird durch einen Aufsitzrasenmäher mit den Merkmalen des Anspruchs 1 gelöst.

Hiernach ist vorgesehen, dass der Aufsitzrasenmäher ein zweites Gehäuse zur Wärmeisolierung des ersten Gehäuses aufweist. Das erste Gehäuse wird auch als Schalldämpfergehäuse bezeichnet. Das zweite Gehäuse wird auch als Isoliergehäuse bezeichnet. Das zweite Gehäuse umschließt das erste Gehäuse zumindest teilweise. Das zweite Gehäuse weist an seiner Außenseite einen Emissionsgrad von größer als 0,8, insbesondere von größer als 0,9 auf. Es hat sich gezeigt, dass ein zweites Gehäuse, das das erste Gehäuse zumindest teilweise umschließt, an seiner Außenseite im Betrieb des Schalldämpfers eine geringere Temperatur aufweist als das erste Gehäuse eines gattungsgemäßen Aufsitzrasenmähers bei ansonsten gleichen Betriebsbedingungen. Dies ist insofern überraschend, als dass zu erwarten war, dass sich das zweite Gehäuse aufgrund von Wärmestrahlung ausgehend vom ersten Gehäuse entsprechend aufheizt und sich die Wärme in dem zweiten Gehäuse sogar anstaut, wodurch es noch heißer wird. Dadurch, dass das zweite Gehäuse an seiner Außenseite einen Emissionsgrad von größer als 0,8, insbesondere von größer als 0,9 aufweist, kann das zweite Gehäuse Wärme schnell an die Umgebung abgeben. Der Emissionsgrad eines Körpers gibt an, wieviel Strahlung er im Vergleich zu einem idealen Wärmestrahler, einem schwarzen Körper, abgibt. Durch die schnelle Wärmeabgabe des zweiten Gehäuses wird die Temperatur der Außenseite des zweiten Gehäuses auf einem vergleichsweise geringen Wert gehalten. Insgesamt ist dadurch ein sicherer Betrieb des Aufsitzrasenmähers möglich. Die Gefahr einer Entzündung von trockenem Schnittgut durch den Schalldämpfer oder durch den Aufsitzrasenmäher ist minimiert.

Vorteilhaft umschließt das zweite Gehäuse das erste Gehäuse derart, dass das zweite Gehäuse bezüglich eines Punktes innerhalb des ersten Gehäuses einen Raumwinkelbereich von mindestens 70%, insbesondere von mindestens 90% des gesamten Raumwinkels abdeckt. Der gesamte Raumwinkel beträgt 4π sr. Dadurch deckt das zweite Gehäuse das erste Gehäuse in einem großen Bereich ab. Der Begriff "abdecken" ist hierbei so zu verstehen, dass auf einer Geraden ausgehend von dem Punkt innerhalb des ersten Gehäuses sowohl ein Teil des ersten Gehäuses als auch ein Teil des zweiten Gehäuses liegt. Insbesondere beinhaltet der Begriff "abdecken" nicht, dass das zweite Gehäuse am ersten Gehäuse anliegt oder dieses berührt.

In vorteilhafter Weiterbildung der Erfindung umschließt das zweite Gehäuse das erste Gehäuse mit Ausnahme von Öffnungen im zweiten Gehäuse für die mindestens eine Verbindungsleitung und für einen Abgasauslass vollständig. Dadurch kann Schnittgut lediglich durch die Öffnung für den Abgasauslass zum ersten Gehäuse des Schalldämpfers vordringen. Ablagerungen von Schnittgut im Bereich des ersten Gehäuses sind kaum möglich. Die Gefahr einer Entzündung von Schnittgut oder anderen Dingen durch Kontakt mit dem ersten Gehäuse des Schalldämpfers ist dadurch minimiert.

Zweckmäßig besteht zwischen dem ersten Gehäuse und dem zweiten Gehäuse ein Isolierabstand. Dadurch ist die Wärmeübertragung vom ersten Gehäuse auf das zweite Gehäuse erschwert. Das erste Gehäuse weist bei Positionierung des Aufsitzrasenmähers auf einer Horizontalebene eine Vertikalhöhe auf. Vorteilhaft beträgt der senkrecht zu einer Wand des zweiten Gehäuses gemessene Isolierabstand mindestens 5%, insbesondere mindestens 10% der Vertikalhöhe. Zweckmäßig beträgt der Isolierabstand mindestens 5 mm, insbesondere mindestens 8 mm. Dadurch kann das zweite Gehäuse bei guter Isolierwirkung gleichzeitig kompakt gebaut sein.

In vorteilhafter Weiterbildung der Erfindung ist vorgesehen, dass der Aufsitzrasenmäher einen Träger umfasst, dass der Träger an dem zweiten Gehäuse befestigt ist, und dass der Träger den Schalldämpfer trägt. Dadurch kann das erste Gehäuse des Schalldämpfers so im zweiten Gehäuse angeordnet sein, dass eine Wärmeübertragung vom ersten Gehäuse auf das zweite Gehäuse durch Wärmeleitung lediglich durch den Träger möglich ist. Dadurch kann der Beitrag der Wärmeleitung zur gesamten Wärmeübertragung durch entsprechende Dimensionierung des Trägers sehr gering sein.

In besonderer Ausgestaltung der Erfindung ist eine Oberseite des zweiten Gehäuses durch eine Abweisungsfläche zur Vermeidung der Ansammlung von Schnittgut gebildet. Dadurch wird vermieden, dass sich Schnittgut auf der Oberseite des zweiten Gehäuses ansammelt und dort aufgeheizt oder entzündet wird. Dadurch ist die Gefahr der Entzündung von Schnittgut minimiert. Vorteilhaft ist die Abweisungsfläche zumindest teilweise abgerundet. Zweckmäßig ist die Abweisungsfläche eine zumindest teilweise konvexe Fläche.

In vorteilhafter Weiterbildung der Erfindung ist vorgesehen, dass das zweite Gehäuse an seiner Außenseite schwarz ist. Dadurch kann die Wärmeenergie des zweiten Gehäuses über Wärmestrahlung besonders gut an die Umgebung abgegeben werden. Dadurch kann ein übermäßiges Aufheizen des zweiten Gehäuses vermieden werden.

Vorteilhaft weist das zweite Gehäuse an seiner Innenseite einen Emissionsgrad von weniger als 0,25, insbesondere von weniger als 0,15 auf. Dadurch absorbiert das zweite Gehäuse an seiner Innenseite besonders wenig Wärmestrahlung. Dadurch heizt sich das zweite Gehäuse nur in einem vergleichsweise geringen Maß auf. Aufgrund des geringen Emissionsgrads ist der Anteil der reflektierten Wärmestrahlung besonders hoch. Die auf die Innenseite des zweiten Gehäuses auftreffende Wärmestrahlung wird reflektiert und auf das erste Gehäuse zurückgelenkt. Von dort kann sie mit den Abgasen, die durch den Schalldämpfer geleitet werden, abgeführt werden.

Vorteilhaft ist die Wand des zweiten Gehäuses aus Aluminium. Die geringe Dichte von Aluminium führt zu einer hohen Wärmekapazität. Dadurch verteilt sich die Wärme gleichmäßig. Es kommt zu keiner Nachheizphase. Die Kühlung beginnt sofort.

Zweckmäßig ist die Wand des zweiten Gehäuses an der Innenseite des zweiten Gehäuses unbeschichtet. Dies führt zu dem geringen Emissionsgrad und der damit verbundenen geringen Absorption von Wärmestrahlung durch das zweite Gehäuse an seiner Innenseite.

In vorteilhafter Weiterbildung der Erfindung ist vorgesehen, dass die Öffnung des zweiten Gehäuses für den Abgasauslass in Fahrrichtung des Aufsitzrasenmähers seitlich angeordnet ist. Dadurch wird beim Auffahren auf ein leicht entzündbares Hindernis mit dem Aufsitzrasenmäher die größte Wärme in Form von Abgasen nicht direkt auf das Hindernis geleitet. Vielmehr können die Abgase in Fahrrichtung seitlich entweichen. Dadurch ist die Gefahr der Entzündung des Hindernisses gesenkt.

Vorteilhaft ist der Verbrennungsmotor zur Leitung von Abgasen über mindestens eine Verbindungsleitung mit dem Schalldämpfer verbunden.

Ausführungsbeispiele der Erfindung werden im Folgenden anhand der Zeichnung erläutert. Es zeigen:
- Fig. 1: eine perspektivische Teildarstellung eines Aufsitzrasenmähers mit einem Schalldämpfer in einem zweiten Gehäuse,
- Fig. 2: eine perspektivische Darstellung des zweiten Gehäuses und des Verbrennungsmotors aus Fig. 1,
- Fig. 3: einen Schnitt durch den Aufsitzrasenmäher aus Fig. 1 und insbesondere durch den Schalldämpfer aus Fig. 1, wobei sich die Schnittebene in Fahrrichtung des Aufsitzrasenmähers erstreckt,
- Fig. 4: eine perspektivische Darstellung des zweiten Gehäuses aus den Figuren 1 bis 3,
- Fig. 5 und 6: Seitenansichten des zweiten Gehäuses aus Fig. 4,
- Fig. 7 und 8: Draufsichten auf das zweite Gehäuse aus Fig. 4,
- Fig. 9: einen Schnitt durch das zweite Gehäuse und den Schalldämpfer aus Fig. 8 entlang der Schnittebene IX-IX aus Fig. 8,
- Fig. 10: einen Schnitt durch das zweite Gehäuse und den Schalldämpfer aus Fig. 8 entlang der Schnittebene X-X aus Fig. 8,
- Fig. 11: eine perspektivische Darstellung eines alternativen Ausführungsbeispiels eines zweiten Gehäuses mit lediglich einer einzigen Öffnung für eine Verbindungsleitung zur Verbindung mit dem Verbrennungsmotor,
- Fig. 12 und 13: Draufsichten auf das zweite Gehäuse aus Fig. 11,
- Fig. 14: einen Schnitt durch das zweite Gehäuse und den Schalldämpfer aus Fig. 13 entlang der Schnittebene XIV-XIV aus Fig. 13.

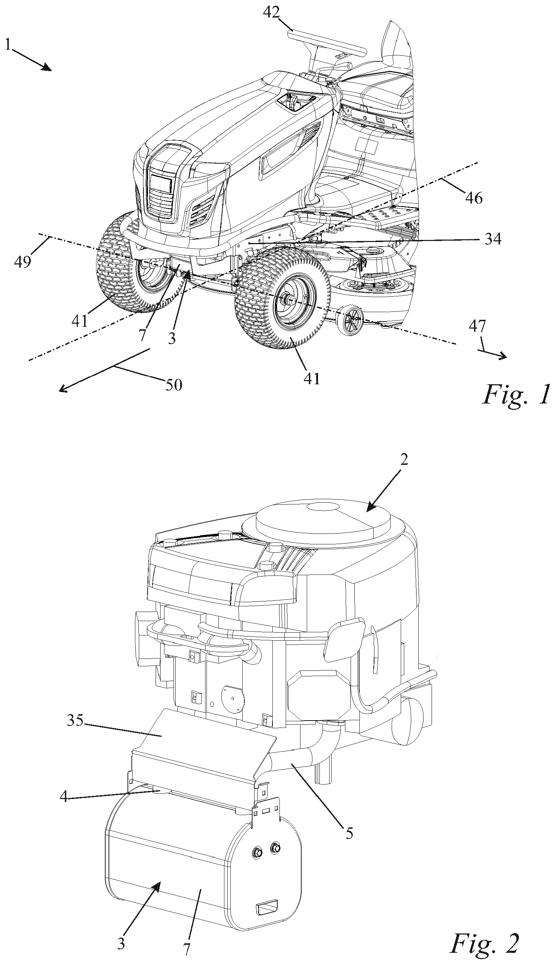

Fig. 1 zeigt einen Aufsitzrasenmäher 1. Der Aufsitzrasenmäher 1 umfasst Vorderräder 41. Die Vorderräder 41 sind mittels eines Lenkrads 42 lenkbar. Bei einer Geradeausfahrt des Aufsitzrasenmähers 1 fährt der Aufsitzrasenmäher 1 in einer Fahrrichtung 50. Die Fahrrichtung 50 erstreckt sich in Richtung einer Längsmittelachse 46 des Aufsitzrasenmähers 1. Bei einer Geradeausfahrt des Aufsitzrasenmähers 1 drehen sich die Vorderräder 41 um eine gemeinsame Drehachse 49. Die Drehachse 49 verläuft senkrecht zur Längsmittelachse 46. In Fahrrichtung 50 vor der Drehachse 49 ist ein in ein zweites Gehäuse 7 eingeschlossener Schalldämpfer 3 angeordnet. Der Schalldämpfer 3 ist auf Höhe der Drehachse 49 angeordnet. Der Schalldämpfer 3 ist in Fig. 1 nicht sichtbar.

Wie in Fig. 2 dargestellt, ist der Schalldämpfer 3 über eine Verbindungsleitung 4 mit einem Verbrennungsmotor 2 verbunden. Der Schalldämpfer 3 ist - in Fig. 2 nicht sichtbar - in dem zweiten Gehäuse 7 angeordnet. Im Ausführungsbeispiel nach Fig. 2 ist der Schalldämpfer 3 zusätzlich über eine Verbindungsleitung 5 mit dem Verbrennungsmotor 2 verbunden. Die Verbindungsleitung 4, 5 ist ein Krümmer. Über die Verbindungsleitung 4, 5 werden Abgase aus dem Verbrennungsmotor 2 in den Schalldämpfer 3 geleitet. Jede der Verbindungsleitungen 4 und 5 ist einem Zylinder des Verbrennungsmotors 2 zugeordnet. Der Schalldämpfer 3 ist in einem Abstand zu dem Verbrennungsmotor 2 angeordnet. Zwischen dem zweiten Gehäuse 7 und dem Verbrennungsmotor 2 ist ein Hitzeschutzblech 35 angeordnet. Das Hitzeschutzblech 35 schirmt Wärmestrahlung zwischen dem zweiten Gehäuse 7 und dem Verbrennungsmotor 2 zumindest teilweise ab.

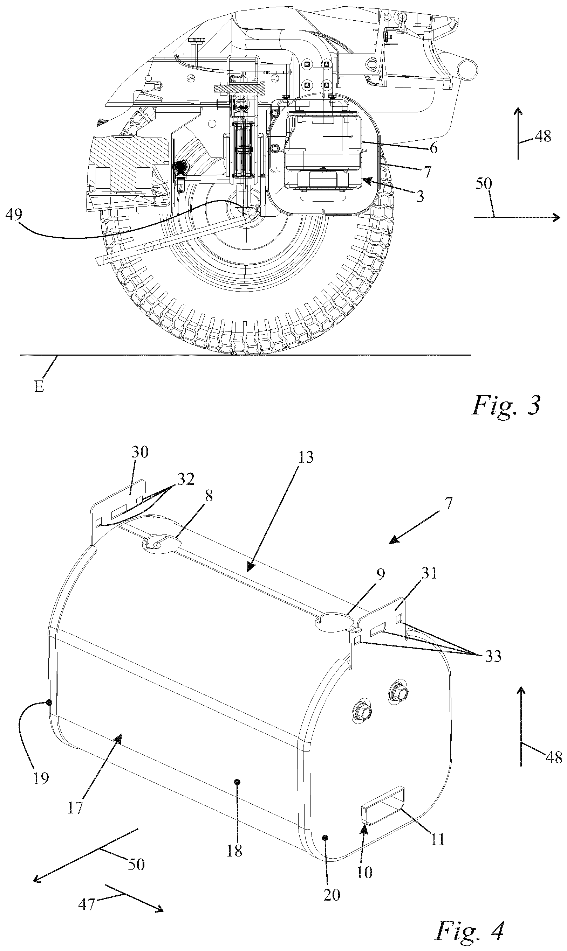

Wie in Fig. 3 gezeigt, umfasst der Schalldämpfer 3 ein erstes Gehäuse 6. In das erste Gehäuse 6 des Schalldämpfers 3 sind Abgase zur Schalldämpfung einleitbar. Der Aufsitzrasenmäher 1 umfasst ein zweites Gehäuse 7. Das zweite Gehäuse 7 dient zur Wärmeisolierung des ersten Gehäuses 6 des Schalldämpfers 3. Das zweite Gehäuse 7 umschließt das erste Gehäuse 6 zumindest teilweise.

Bei Positionierung des Aufsitzrasenmähers 1 auf einer Horizontalebene E ist das erste Gehäuse 6 des Schalldämpfers 3 in einem größeren Abstand zur Horizontalebene E angeordnet als das zweite Gehäuse 7. Bezüglich einer Vertikalrichtung 48, die senkrecht auf die Horizontalebene steht, ist das erste Gehäuse 6 des Schalldämpfers 3 höher als die Drehachse 49 angeordnet. Das zweite Gehäuse 7 liegt bezüglich der Vertikalrichtung 48 überwiegend oberhalb der Drehachse 49.

Wie in Fig. 4 dargestellt, weist das zweite Gehäuse 7 Öffnungen 8, 9 und 10 auf. Die Öffnung 8 ist für die Verbindungsleitung 4 vorgesehen. Die Öffnung 9 ist für die Verbindungsleitung 5 vorgesehen. Die Öffnung 10 ist für den Abgasauslass 11 des Schalldämpfers 3 vorgesehen. Die Öffnung 10 für den Abgasauslass 11 ist in Fahrrichtung 50 des Aufsitzrasenmähers 1 seitlich angeordnet. Der Abgasauslass 11 durchdringt die Öffnung 10.

Das zweite Gehäuse 7 besitzt eine Wand 17. Die Wand 17 ist aus Aluminium. Die Wand 17 ist von einem Mittelteil 18 und von zwei Seitenteilen 19 und 20 gebildet. Die Seitenteile 19 und 20 liegen sich in einer Achsrichtung 47 gegenüber. Die Achsrichtung 47 verläuft in Richtung der Drehachse 49. Die Achsrichtung 47 steht senkrecht auf die Fahrrichtung 50 und senkrecht auf die Vertikalrichtung 48. Das Mittelteil 18 der Wand 17 verbindet die beiden Seitenteile 19 und 20 miteinander. Die Öffnungen 8 und 9 für die Verbindungsleitungen 4 und 5 sind im Mittelteil 18 der Wand 17 angeordnet. Die Öffnung 10 für den Abgasauslass 11 ist in dem Seitenteil 11 angeordnet.

Das zweite Gehäuse 7 weist eine Oberseite 13 auf. Bei Positionierung des Aufsitzrasenmähers 1 auf der Horizontalebene E ist die Oberseite 13 des zweiten Gehäuses 7 der Horizontalebene E abgewandt. Die Oberseite 13 des zweiten Gehäuses 7 zeigt bezüglich der Vertikalrichtung 48 nach oben. Die Oberseite 13 des zweiten Gehäuses 7 umfasst die bezüglich der Vertikalrichtung 48 obere Hälfte des zweiten Gehäuses 7. Die Öffnung 8, 9 ist in der Oberseite 13 des zweiten Gehäuses 7 angeordnet. Die Oberseite 13 des zweiten Gehäuses 7 umfasst eine Oberseite des Mittelteils 18 der Wand 17.

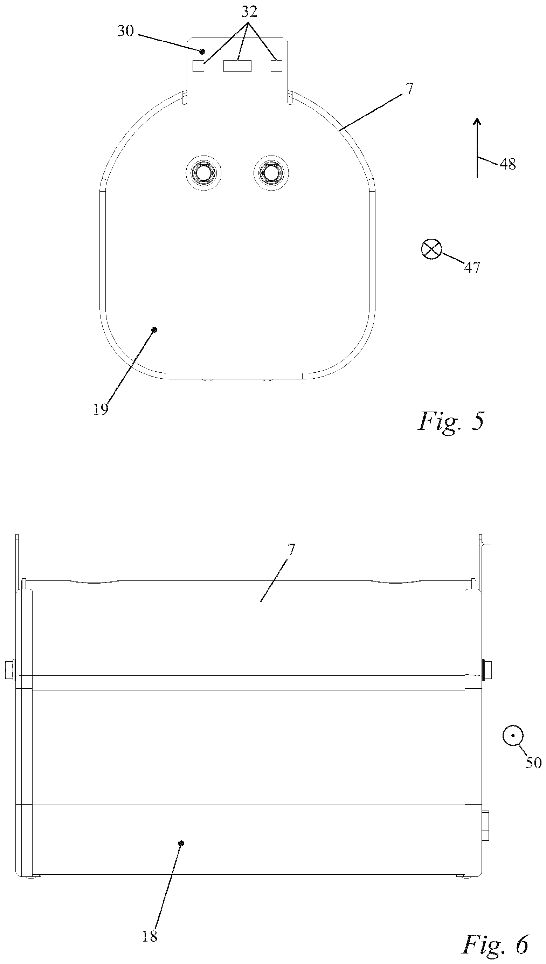

Fig. 5 zeigt eine Seitenansicht auf die Außenseite des Seitenteils 19 der Wand 17 in Achsrichtung 47. An seinem bezüglich der Vertikalrichtung 48 oberen Ende weist das Seitenteil 19 eine Lasche 30 auf. Die Lasche 30 besitzt drei Befestigungsöffnungen 32. In analoger Weise weist das in Fig. 4 dargestellte Seitenteil 20 eine Lasche 31 auf. Die Lasche 31 besitzt drei Befestigungsöffnungen 33. Die Lasche 30, 31 überragt das Mittelteil 18 der Wand 17 in Vertikalrichtung 48.

Mittels zumindest einer Befestigungsöffnung 32 der Lasche 30 und mittels zumindest einer Befestigungsöffnung 33 der Lasche 31 ist das zweite Gehäuse 7 an einem in Fig. 1 dargestellten Grundkörper 34 des Aufsitzrasenmähers 1 befestigt. Das zweite Gehäuse 7 hängt an dem Grundkörper 34 des Aufsitzrasenmähers 1.

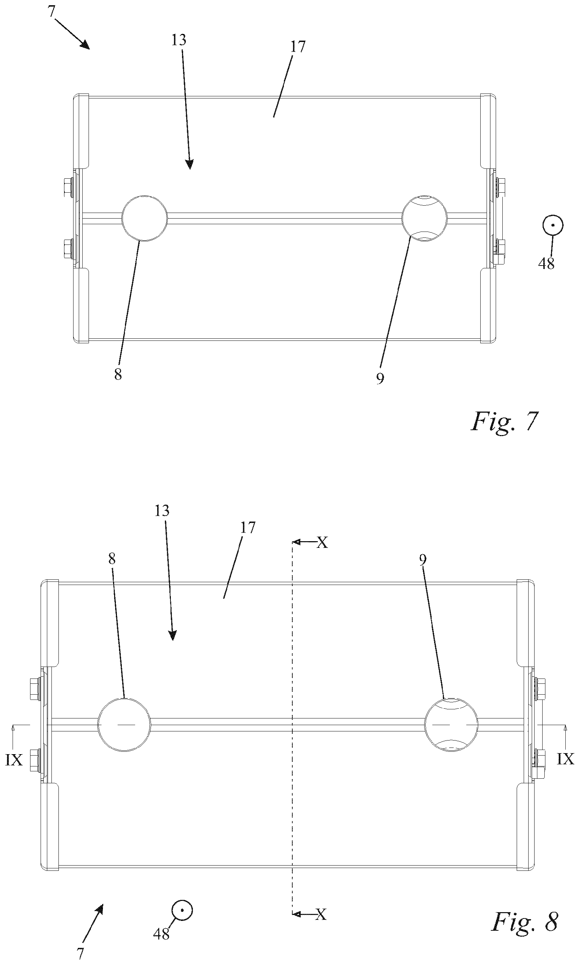

Fig. 6 zeigt eine Seitenansicht auf das Mittelteil 18 der Wand 17 des zweiten Gehäuses 7 in Richtung entgegen der Fahrrichtung 50. Die Figuren 7 und 8 zeigen eine Draufsicht auf das zweite Gehäuse 7 in Richtung entgegen der Vertikalrichtung 48. Die Öffnung 8, 9 durchdringt die Wand 17 an der Oberseite 13 des zweiten Gehäuses 7 in Vertikalrichtung 48 vollständig.

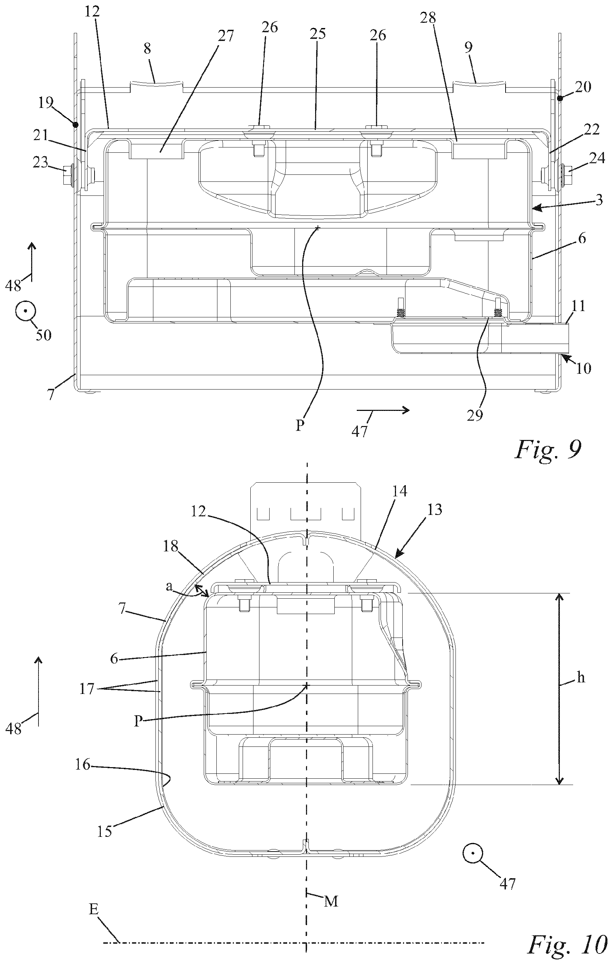

Fig. 9 zeigt einen Schnitt durch das zweite Gehäuse 7 in Richtung senkrecht zur Fahrrichtung 50. Fig. 10 zeigt einen Schnitt durch das zweite Gehäuse 7 in Richtung senkrecht zur Achsrichtung 47. Der Aufsitzrasenmäher 1 umfasst einen Träger 12. Der Träger 12 ist an dem zweiten Gehäuse 7 befestigt. Der Träger 12 trägt den Schalldämpfer 3. Der Träger 12 ist innerhalb des zweiten Gehäuses 6 angeordnet. Das zweite Gehäuse 7 umschließt sowohl den Träger 12 als auch das erste Gehäuse 6 zumindest teilweise. Wie in Fig. 9 dargestellt, ist der Träger 12 in einem Schnitt senkrecht zur Fahrrichtung 50 im Wesentlichen U-förmig. Der Träger 12 besitzt Schenkel 21 und 22. Die Schenkel des U sind durch die Schenkel 21 und 22 des Trägers 12 gebildet. Der Schenkel 21 des Trägers 12 ist am Seitenteil 19 der Wand 17 des zweiten Gehäuses 7 befestigt. Hierzu ist eine Schraube 23 durch das Seitenteil 19 in den Schenkel 21 des Trägers 12 geschraubt. In analoger Weise ist der Schenkel 22 des Trägers 12 an dem Seitenteil 20 der Wand 17 des zweiten Gehäuses 7 befestigt. Hierzu ist eine Schraube 24 durch das Seitenteil 20 in den Schenkel 22 geschraubt. Die Schenkel 21 und 22 des Trägers 12 sind über ein Verbindungsteil 25 des Trägers 12 miteinander verbunden. Das Verbindungsteil 25 erstreckt sich längs der Achsrichtung 47. Das erste Gehäuse 6 des Schalldämpfers 3 ist mit seiner Oberseite an dem Verbindungsteil 25 des Trägers 12 befestigt. Hierzu sind Schrauben 26 durch das Verbindungsteil 25 in das erste Gehäuse 6 des Schalldämpfers 3 geschraubt. Das erste Gehäuse 6 ist bezüglich der Vertikalrichtung 48 unterhalb des Verbindungsteils 25 des Trägers 12 angeordnet. Das erste Gehäuse 6 des Schalldämpfers 3 hängt an dem Träger 12.

Wie in den Figuren 9 und 10 dargestellt, ist im Inneren des ersten Gehäuses 6 des Schalldämpfers 3 ein Punkt P angeordnet. Das erste Gehäuse 6 schließt den Punkt P ein. Der Punkt P kann an jeder beliebigen Stelle im Inneren des ersten Gehäuses 6 angeordnet sein. In den Ausführungsbeispielen ist der Punkt P der Schwerpunkt des ersten Gehäuses 6. Wie sich aus der Zusammenschau der Figuren 4, 9 und 10 ergibt, umschließt das zweite Gehäuse 7 das erste Gehäuse 6 derart, dass das zweite Gehäuse 7 bezüglich des Punkts P einen Raumwinkelbereich von mindestens 70%, im Ausführungsbeispiel von mindestens 90% des gesamten Raumwinkels abdeckt. Der Punkt P bildet den Winkelscheitel des Raumwinkels. Der abgedeckte Raumwinkelbereich ist nicht zusammenhängend und weist einzelne offene Stellen auf. Der gesamte Raumwinkel beträgt 4π sr. Demnach deckt das zweite Gehäuse 7 bezüglich des Punkts P einen Raumwinkelbereich von mindestens 2,8π sr, im Ausführungsbeispiel von mindestens 3,6π sr ab. Der Begriff "abdecken" bedeutet in diesem Zusammenhang, dass eine vom Punkt P ausgehende Gerade zunächst das erste Gehäuse 6 des Schalldämpfers 3 und dann das zweite Gehäuse 7 schneidet. Ein Teil des zweiten Gehäuses 7, der von einer solchen Geraden geschnitten wird, deckt das erste Gehäuse 6 ab. Hierbei ist kein Kontakt zwischen dem ersten Gehäuse 6 und dem zweiten Gehäuse 7 erforderlich. Eine gedachte Kugel besitzt als Kugelmittelpunkt den Punkt P. Ein Abdeckteil dieser gedachten Kugel wird von solchen Geraden geschnitten, die sowohl das erste Gehäuse 6 als auch das zweite Gehäuse 7 schneiden. Der Abdeckteil der Kugel stellt eine Abdeckoberfläche der gesamten Kugeloberfläche dar. Die Abdeckoberfläche beträgt mindestens 70%, im Ausführungsbeispiel mindestens 90% der gesamten Kugeloberfläche.

Das zweite Gehäuse 7 umschließt das erste Gehäuse 6 mit Ausnahme der Öffnungen 8 und 9 für die Verbindungsleitungen 4 und 5 und der Öffnung 10 für den Abgasauslass 11 vollständig. Die Schrauben 23 und 24 zur Befestigung des Trägers 12 am zweiten Gehäuse 7 sind Teil des zweiten Gehäuses 7.

Das erste Gehäuse 6 weist eine Einlassöffnung 27 und eine Einlassöffnung 28 auf. Durch die Einlassöffnung 27, 28 können Abgase vom Verbrennungsmotor 2 durch die Verbindungsleitung 4, 5 in das erste Gehäuse 6 des Schalldämpfers 3 eintreten. Hierzu durchdringt die in Fig. 2 dargestellte Verbindungsleitung 4 sowohl die Öffnung 8 im zweiten Gehäuse 7 als auch die Einlassöffnung 27 des ersten Gehäuses 6. Die Verbindungsleitung 5 durchdringt sowohl die Öffnung 9 des zweiten Gehäuses 7 als auch die Einlassöffnung 28 des ersten Gehäuses 6. Die Abgase des Verbrennungsmotors 2 werden durch die Verbindungsleitung 4, 5 durch das zweite Gehäuse 7 in das erste Gehäuse 6 des Schalldämpfers 3 geleitet.

Das erste Gehäuse 6 weist eine Abgasöffnung 29 auf. Durch die Abgasöffnung 29 des ersten Gehäuses 6 können Abgase aus dem ersten Gehäuse 6 des Schalldämpfers 3 austreten. Der Abgasauslass 11 verbindet die Abgasöffnung 29 des ersten Gehäuses 6 mit der Öffnung 10 des zweiten Gehäuses 7. Durch den Abgasauslass 11 werden Abgase vom ersten Gehäuse 6 durch die Öffnung 10 aus dem zweiten Gehäuse 7 herausgeleitet. Der Abgasauslass 11 ist eine Verbindungsleitung. Der Abgasauslass 11 besitzt einen rohrartigen Querschnitt. Im Schalldämpfer 3 werden die Abgase von der Einlassöffnung 27, 28 mäanderartig zu der Abgasöffnung 29 geleitet. Hierbei werden die Abgase an den mäanderartig ausgebildeten Innenwänden des Schalldämpfers abgebremst und gekühlt. Dies führt zu einer Reduzierung der Schallemission.

Wie in Fig. 10 gezeigt, besteht zwischen dem ersten Gehäuse 6 des Schalldämpfers 3 und dem zweiten Gehäuse 7 ein Isolierabstand a. Der Isolierabstand a entspricht dem kleinsten Abstand zwischen dem ersten Gehäuse 6 und dem zweiten Gehäuse 7. Der Isolierabstand a ist senkrecht zu der Wand 17 des zweiten Gehäuses 7 gemessen. Der Isolierabstand a besteht zwischen dem Mittelteil 18 der Wand 17 des zweiten Gehäuses 7 und dem ersten Gehäuse 6.

Das erste Gehäuse 6 weist bei Positionierung des Aufsitzrasenmähers 1 auf der Horizontalebene E eine Vertikalhöhe h auf. Der Isolierabstand a beträgt mindestens 5%, in den Ausführungsbeispielen mindestens 10% der Vertikalhöhe h. Der Isolierabstand a beträgt mindestens 5 mm, in den Ausführungsbeispielen mindestens 8 mm. Das zweite Gehäuse 7 weist eine Außenseite 15 und eine Innenseite 16 auf. Die Außenseite 15 ist zugleich die Außenseite der Wand 17 des zweiten Gehäuses 7. Die Innenseite 16 ist zugleich die Innenseite der Wand 17 des zweiten Gehäuses 7. Die Außenseite 15 ist dem Schalldämpfer 3 abgewandt. Die Innenseite 16 des zweiten Gehäuses 7 ist dem ersten Gehäuse 6 des Schalldämpfers 3 zugewandt. Der Isolierabstand a ist senkrecht zu der Innenseite 16 der Wand 17 des zweiten Gehäuses 7 gemessen.

Die Oberseite 13 des zweiten Gehäuses 7 ist durch eine Abweisungsfläche 14 gebildet. Die Abweisungsfläche 14 dient zur Vermeidung der Ansammlung von Schnittgut. Die Abweisungsfläche 14 ist zumindest teilweise abgerundet. Die Abweisungsfläche 14 ist eine zumindest teilweise konvexe Fläche. Die Abweisungsfläche 14 ist durch das Mittelteil 18 der Wand 17 des zweiten Gehäuses 7 an der Außenseite 15 des zweiten Gehäuses 7 gebildet.

Die Wand 17 des zweiten Gehäuses 7 läuft geschlossen um die Achsrichtung 47 um. Die Wand 17 ist durch zwei Halbschalen gebildet. Die beiden Halbschalen liegen im Bereich einer Mittellängsebene M aneinander an. Bei Positionierung des Aufsitzrasenmähers 1 auf der Horizontalebene E verläuft die Mittellängsebene M senkrecht zur Horizontalebene E. Die Mittellängsebene M ist eine Symmetrieebene der Wand 17. Die Halbschalen der Wand 17 sind bezüglich der Mittellängsebene M spiegelsymmetrisch. Jede der beiden Halbschalen der Wand 17 ist an der Oberseite 13 des zweiten Gehäuses 7 konvex. Die Halbschalen sind im höchsten Punkt bezüglich der Vertikalrichtung 48 konvex bei Betrachtung des zweiten Gehäuses 7 von seiner Außenseite 15 aus. Durch die konvexe Gestaltung der Oberseite 13 des zweiten Gehäuses 7 wird Schnittgut von der Abweisungsfläche 14 abgewiesen. Bei Positionierung des Aufsitzrasenmähers 1 auf der Horizontalebene E rutscht auf die Abweisungsfläche 14 aufgebrachtes Schnittgut von der Abweisungsfläche 14 auf den Boden der Horizontalebene E.

Das zweite Gehäuse 7 weist an seiner Außenseite 15 einen Emissionsgrad von größer als 0,8, in den Ausführungsbeispielen von größer als 0,9 auf Das zweite Gehäuse 7 ist an seiner Außenseite schwarz. Das zweite Gehäuse 7 weist an seiner Innenseite 16 einen Emissionsgrad von weniger als 0,25, in den Ausführungsbeispielen von weniger als 0,15 auf. Die Wand 17 des aus Aluminium bestehenden zweiten Gehäuses 7 ist an der Innenseite 16 des zweiten Gehäuses 7 unbeschichtet. Dadurch ist die Absorption von Wärmestrahlung sehr gering. Das zweite Gehäuse 7 nimmt an seiner Innenseite 16 nur in geringem Maß Wärme durch Wärmestrahlung auf. An seiner Außenseite 15 gibt das zweite Gehäuse 7 aufgrund der schwarzen Beschichtung der Außenseite 15 Wärme schnell ab. Dadurch ist die Temperatur des zweiten Gehäuses 7 vergleichsweise gering.

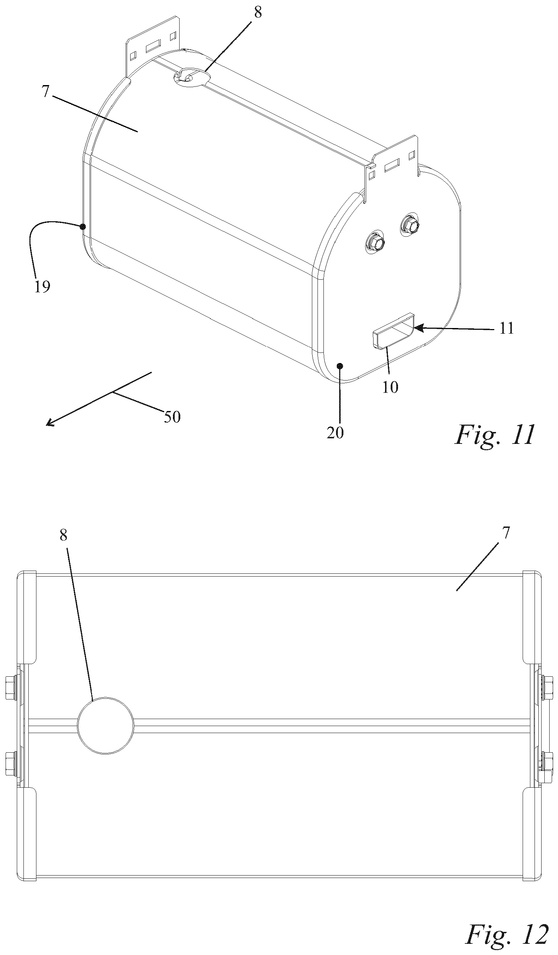

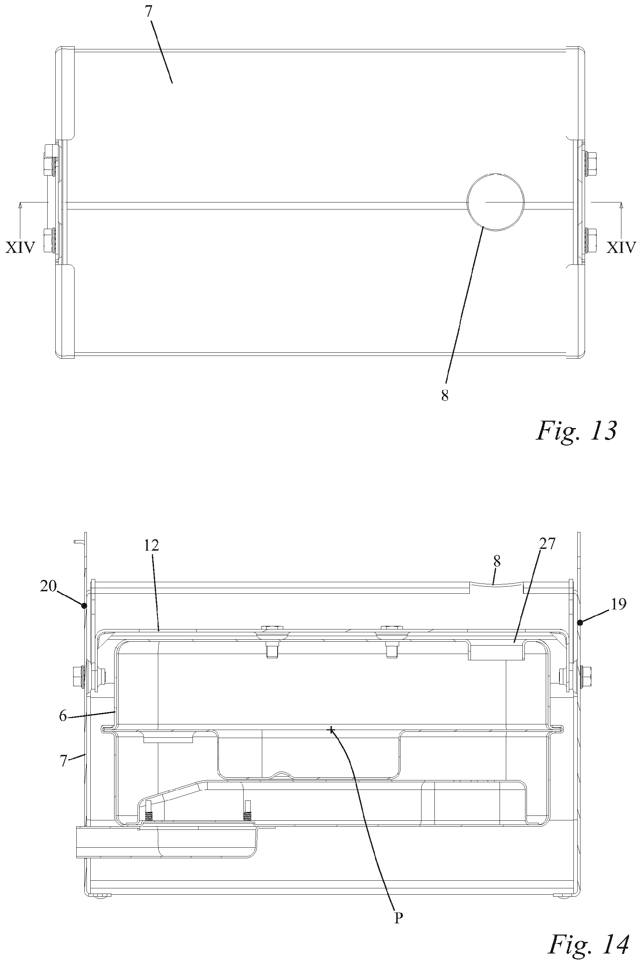

Die Figuren 11 bis 14 zeigen ein alternatives Ausführungsbeispiel für das erste Gehäuse 6 und das zweite Gehäuse 7. Bei dem zweiten Gehäuse 7 nach den Figuren 11 bis 14 ist die Öffnung 9, die das zweite Gehäuse 7 nach den Figuren 1 bis 10 aufweist, verschlossen. Im Ausführungsbeispiel nach den Figuren 11 bis 14 weist das zweite Gehäuse 7 lediglich die Öffnung 8 für die Verbindungsleitung 4 auf. Die Öffnung 8 weist zu dem Seitenteil 19 der Wand 17 des zweiten Gehäuses 7 einen kleineren Abstand auf als zu dem Seitenteil 20 der Wand 17 des zweiten Gehäuses 7. In analoger Weise weist das in Fig. 14 dargestellte alternative erste Gehäuse 6 im Vergleich zu dem ersten Gehäuse 6 nach den Figuren 1 bis 10 keine Einlassöffnung 28 auf. Das erste Gehäuse 6 gemäß dem Ausführungsbeispiel nach Fig. 14 weist lediglich die Einlassöffnung 27 für die Verbindungsleitung 4 auf. Die Einlassöffnung 27 weist zu dem Seitenteil 19 der Wand 17 des zweiten Gehäuses 7 einen kleineren Abstand auf als zu dem Seitenteil 20 der Wand 17 des zweiten Gehäuses 7.

Das erste Gehäuse 6 und das zweite Gehäuse 7 nach den Figuren 11 bis 14 sind für einen Verbrennungsmotor 2 mit lediglich einem Zylinder und entsprechend lediglich einer Verbindungsleitung 4 vorgesehen. Ein Aufsitzrasenmäher 1 mit einem ersten Gehäuse 6 und mit einem zweiten Gehäuse 7 nach den Figuren 11 bis 14 weist lediglich die Verbindungsleitung 4, und nicht zusätzlich die Verbindungsleitung 5 auf.

Ansonsten trifft die Beschreibung für das erste Gehäuse 6, das zweite Gehäuse 7 und den Aufsitzrasenmäher nach den Figuren 1 bis 10 identisch auf das Ausführungsbeispiel für das erste Gehäuse 6, das zweite Gehäuse 7 und den Aufsitzrasenmäher 1 nach den Figuren 11 bis 14 zu.

Dadurch, dass das zweite Gehäuse 7 das erste Gehäuse 6 zumindest teilweise umschließt und an seiner Außenseite 15 einen Emissionsgrad von 0,8, bzw. von 0,9 aufweist, ist die Maximaltemperatur an der Außenseite 15 des zweiten Gehäuses im Betrieb des Aufsitzrasenmähers 1 in beiden Ausführungsbeispielen auf unter 250°C begrenzt. Dies gilt auch für den Betrieb des Aufsitzrasenmähers 1 unter Volllast. Zündtemperaturen von Heu liegen zwischen 260°C und 310°C. Daher ist die Gefahr einer Entzündung von trockenem Schnittgut durch die Erfindung minimiert.

## Patentansprüche

1. Aufsitzrasenmäher umfassend einen Verbrennungsmotor (2) und einen Schalldämpfer (3), wobei der Verbrennungsmotor (2) zur Leitung von Abgasen mit dem Schalldämpfer (3) verbunden ist, wobei der Schalldämpfer (3) ein erstes Gehäuse (6) aufweist, in das Abgase zur Schalldämpfung einleitbar sind, wobei der Aufsitzrasenmäher (1) ein zweites Gehäuse (7) zur Wärmeisolierung des ersten Gehäuses (6) aufweist, wobei das zweite Gehäuse (7) das erste Gehäuse (6) zumindest teilweise umschließt, **dadurch gekennzeichnet, dass** das zweite Gehäuse (7) an seiner Außenseite (15) einen Emissionsgrad von größer als 0,8, insbesondere von größer als 0,9 aufweist.

2. Aufsitzrasenmäher nach Anspruch 1,
**dadurch gekennzeichnet, dass** das zweite Gehäuse (7) das erste Gehäuse (6) derart umschließt, dass das zweite Gehäuse (7) bezüglich eines Punkts (P) innerhalb des ersten Gehäuses (6) einen Raumwinkelbereich von mindestens 70%, insbesondere von mindestens 90% des gesamten Raumwinkels abdeckt.

3. Aufsitzrasenmäher nach Anspruch 1 oder 2,
**dadurch gekennzeichnet, dass** das zweite Gehäuse (7) das erste Gehäuse (6) mit Ausnahme von Öffnungen (8, 9, 10) für die mindestens eine Verbindungsleitung (4) und für einen Abgasauslass (11) vollständig umschließt.

4. Aufsitzrasenmäher nach einem der Ansprüche 1 bis 3,
**dadurch gekennzeichnet, dass** zwischen dem ersten Gehäuse (6) und dem zweiten Gehäuse (7) ein Isolierabstand (a) besteht.

5. Aufsitzrasenmäher nach Anspruch 4,
**dadurch gekennzeichnet, dass** das erste Gehäuse (6) bei Positionierung des Aufsitzrasenmähers (1) auf einer Horizontalebene (E) eine Vertikalhöhe (h) aufweist, und dass der senkrecht zu einer Wand (17) des zweiten Gehäuses (7) gemessene Isolierabstand (a) mindestens 5%, insbesondere mindestens 10% der Vertikalhöhe (h) beträgt.

6. Aufsitzrasenmäher nach Anspruch 4 oder 5,
**dadurch gekennzeichnet, dass** der Isolierabstand (a1, a2) mindestens 5 mm, insbesondere mindestens 8 mm beträgt.

7. Aufsitzrasenmäher nach einem der Ansprüche 1 bis 6,
**dadurch gekennzeichnet, dass** der Aufsitzrasenmäher (1) einen Träger (12) umfasst, dass der Träger (12) an dem zweiten Gehäuse (7) befestigt ist, und dass der Träger (12) den Schalldämpfer (3) trägt.

8. Aufsitzrasenmäher nach einem der Ansprüche 1 bis 7,
**dadurch gekennzeichnet, dass** eine Oberseite (13) des zweiten Gehäuses (7) durch eine Abweisungsfläche (14) zur Vermeidung der Ansammlung von Schnittgut gebildet ist.

9. Aufsitzrasenmäher nach Anspruch 8,
**dadurch gekennzeichnet, dass** die Abweisungsfläche (14) zumindest teilweise abgerundet ist.

10. Aufsitzrasenmäher nach Anspruch 8 oder 9,
**dadurch gekennzeichnet, dass** die Abweisungsfläche (14) eine zumindest teilweise konvexe Fläche ist.

11. Aufsitzrasenmäher nach Anspruch 10,
**dadurch gekennzeichnet, dass** das zweite Gehäuse (7) an seiner Außenseite (15) schwarz ist.

12. Aufsitzrasenmäher nach einem der Ansprüche 1 bis 11,
**dadurch gekennzeichnet, dass** das zweite Gehäuse (7) an seiner Innenseite (16) einen Emissionsgrad von weniger als 0,25, insbesondere von weniger als 0,15 aufweist.

13. Aufsitzrasenmäher nach einem der Ansprüche 1 bis 12,
**dadurch gekennzeichnet, dass** die Wand (17) des zweiten Gehäuses (7) aus Aluminium ist.

14. Aufsitzrasenmäher nach Anspruch 13,
**dadurch gekennzeichnet, dass** die Wand (17) des zweiten Gehäuses (7) an der Innenseite (16) des zweiten Gehäuses (7) unbeschichtet ist.

15. Aufsitzrasenmäher nach einem der Ansprüche 1 bis 14,
**dadurch gekennzeichnet, dass** die Öffnung (10) des zweiten Gehäuses (7) für den Abgasauslass (11) in Fahrrichtung (50) des Aufsitzrasenmähers (1) seitlich angeordnet ist.

16. Aufsitzrasenmäher nach einem der Ansprüche 1 bis 15,
**dadurch gekennzeichnet, dass** der Verbrennungsmotor (2) über mindestens eine Verbindungsleitung (4, 5) mit dem Schalldämpfer (3) verbunden ist.

## Claims

1. Ride-on lawnmower comprising an internal combustion engine (2) and a muffler (3), wherein the internal combustion engine (2) is connected to the muffler (3) for conducting exhaust gases, wherein the muffler (3) has a first housing (6) into which exhaust gases can be introduced for muffling purposes, wherein the ride-on lawnmower (1) has a second housing (7) for thermally insulating the first housing (6), wherein the second housing (7) at least partially surrounds the first housing (6), **characterized in that** the second housing (7) has a degree of emission of greater than 0.8, in particular of greater than 0.9, on its outer side (15).

2. Ride-on lawnmower according to claim 1,
**characterized in that** the second housing (7) surrounds the first housing (6) in such a way that the second housing (7) covers a solid angle range of at least 70%, in particular of at least 90%, of the entire solid angle with respect to a point (P) within the first housing (6).

3. Ride-on lawnmower according to claim 1 or 2,
**characterized in that** the second housing (7) completely surrounds the first housing (6) with the exception of openings (8, 9, 10) for the at least one connecting line (4) and for an exhaust gas outlet (11).

4. Ride-on lawnmower according to one of claims 1 to 3,
**characterized in that** there is an insulation gap (a) between the first housing (6) and the second housing (7).

5. Ride-on lawnmower according to claim 4,
**characterized in that** the first housing (6) has a vertical height (h) when the ride-on lawnmower (1) is positioned on a horizontal plane (E), and **in that** the insulation gap (a) measured perpendicularly to a wall (17) of the second housing (7) is at least 5%, in particular at least 10%, of the vertical height (h).

6. Ride-on lawnmower according to claim 4 or 5,
**characterized in that** the insulation gap (a1, a2) is at least 5 mm, in particular at least 8 mm.

7. Ride-on lawnmower according to one of claims 1 to 6,
**characterized in that** the ride-on lawnmower (1) comprises a carrier (12), **in that** the carrier (12) is fastened to the second housing (7), and **in that** the carrier (12) carries the muffler (3).

8. Ride-on lawnmower according to one of claims 1 to 7,
**characterized in that** a top side (13) of the second housing (7) is formed by a deflection surface (14) for preventing the accumulation of cut material.

9. Ride-on lawnmower according to claim 8,
**characterized in that** the deflection surface (14) is at least partially rounded.

10. Ride-on lawnmower according to claim 8 or 9,
**characterized in that** the deflection surface (14) is an at least partially convex surface.

11. Ride-on lawnmower according to claim 10,
**characterized in that** the second housing (7) is black on its outer side (15).

12. Ride-on lawnmower according to one of claims 1 to 11,
**characterized in that** the second housing (7) has a degree of emission of less than 0.25, in particular of less than 0.15, on its inner side (16).

13. Ride-on lawnmower according to one of claims 1 to 12,
**characterized in that** the wall (17) of the second housing (7) is composed of aluminium.

14. Ride-on lawnmower according to claim 13,
**characterized in that** the wall (17) of the second housing (7) is uncoated on the inner side (16) of the second housing (7).

15. Ride-on lawnmower according to one of claims 1 to 14,
**characterized in that** the opening (10) of the second housing (7) for the exhaust gas outlet (11) is arranged laterally in the direction of travel (50) of the ride-on lawnmower (1).

16. Ride-on lawnmower according to one of claims 1 to 15,
**characterized in that** the internal combustion engine (2) is connected to the muffler (3) via at least one connecting line (4, 5).

## Revendications

1. Tondeuse à gazon autoportée comprenant un moteur à combustion interne (2) et un silencieux (3), le moteur à combustion interne (2) étant relié au silencieux (3) pour le guidage des gaz d'échappement, le silencieux (3) présentant un premier boîtier (6) dans lequel les gaz d'échappement peuvent être introduits pour l'atténuation du bruit,
la tondeuse à gazon autoportée (1) présentant un deuxième boîtier (7) servant à l'isolation thermique du premier boîtier (6), le deuxième boîtier (7) entourant le premier boîtier (6) au moins partiellement, **caractérisée en ce que** le deuxième boîtier (7) présente au niveau de son côté extérieur (15) une émissivité supérieure à 0,8, en particulier supérieure à 0,9.

2. Tondeuse à gazon autoportée selon la revendication 1,
**caractérisée en ce que** le deuxième boîtier (7) entoure le premier boîtier (6) de telle sorte que le deuxième boîtier (7), par rapport à un point (P) à l'intérieur du premier boîtier (6), recouvre une région d'angle solide d'au moins 70%, en particulier d'au moins 90% de tout l'angle solide.

3. Tondeuse à gazon autoportée selon la revendication 1 ou 2,
**caractérisée en ce que** le deuxième boîtier (7) entoure complètement le premier boîtier (6) à l'exception d'ouvertures (8, 9, 10) pour l'au moins une conduite de liaison (4) et pour une sortie de gaz d'échappement (11).

4. Tondeuse à gazon autoportée selon l'une des revendications 1 à 3, **caractérisée en ce qu'**une distance d'isolation (a) existe entre le premier boîtier (6) et le deuxième boîtier (7).

5. Tondeuse à gazon autoportée selon la revendication 4,
**caractérisée en ce que** le premier boîtier (6), lors du positionnement de la tondeuse à gazon autoportée (1) sur un plan horizontal (E), présente une hauteur verticale (h), et **en ce que** la distance d'isolation (a) mesurée perpendiculairement à une paroi (17) du deuxième boîtier (7) vaut au moins 5%, en particulier au moins 10% de la hauteur verticale (h).

6. Tondeuse à gazon autoportée selon la revendication 4 ou 5,
**caractérisée en ce que** la distance d'isolation (a1, a2) vaut au moins 5 mm, en particulier au moins 8 mm.

7. Tondeuse à gazon autoportée selon l'une des revendications 1 à 6, **caractérisée en ce que** la tondeuse à gazon autoportée (1) comprend un support (12), **en ce que** le support (12) est fixé au deuxième boîtier (7), et **en ce que** le support (12) supporte le silencieux (3).

8. Tondeuse à gazon autoportée selon l'une des revendications 1 à 7, **caractérisée en ce qu'**un côté supérieur (13) du deuxième boîtier (7) est formé par une surface de déflexion (14) servant à empêcher l'accumulation de matière coupée.

9. Tondeuse à gazon autoportée selon la revendication 8,
**caractérisée en ce que** la surface de déflexion (14) est au moins partiellement arrondie.

10. Tondeuse à gazon autoportée selon la revendication 8 ou 9,
**caractérisée en ce que** la surface de déflexion (14) est une surface au moins partiellement convexe.

11. Tondeuse à gazon autoportée selon la revendication 10,
**caractérisée en ce que** le deuxième boîtier (7) est noir sur son côté extérieur (15).

12. Tondeuse à gazon autoportée selon l'une des revendications 1 à 11, **caractérisée en ce que** le deuxième boîtier (7) présente au niveau de son côté intérieur (16) une émissivité inférieure à 0,25, en particulier inférieure à 0,15.

13. Tondeuse à gazon autoportée selon l'une des revendications 1 à 12, **caractérisée en ce que** la paroi (17) du deuxième boîtier (7) est constituée d'aluminium.

14. Tondeuse à gazon autoportée selon la revendication 13,
**caractérisée en ce que** la paroi (17) du deuxième boîtier (7) est dépourvue de revêtement au niveau du côté intérieur (16) du deuxième boîtier (7).

15. Tondeuse à gazon autoportée selon l'une des revendications 1 à 14, **caractérisée en ce que** l'ouverture (10) du deuxième boîtier (7) pour la sortie de gaz d'échappement (11) est disposée latéralement dans la direction de conduite (50) de la tondeuse à gazon autoportée (1).

16. Tondeuse à gazon autoportée selon l'une des revendications 1 à 15, **caractérisée en ce que** le moteur à combustion interne (2) est relié au silencieux (3) par le biais d'au moins une conduite de liaison (4, 5).
